# EUROPEAN PATENT SPECIFICATION

(11) **EP 0 900 114 B1**
(45) Date of publication and mention of the grant of the patent: **13.02.2002**
(21) Application number: 97922412.8
(22) Date of filing: 24.04.1997
(51) Int. Cl.: B01D 24/24

(54) **FLUID TREATMENT MEDIA SUPPORT SYSTEM**
TRÄGERSYSTEM FÜR FLUIDBEHANDLUNGSMEDIEN
SYSTEME DE SUPPORT DE MEDIA DE TRAITEMENT DE FLUIDE

(30) Priority: 26.04.1996 US 17052 P
(43) Date of publication of application: 10.03.1999
(73) Proprietor: Tetra Technologies, Inc., The Woodlands, Texas 77380 (US)
(72) Inventor: SAVAGE, E., Stuart, Brunswick, ME 04011 (US)
(74) Representative: VOSSIUS & PARTNER
(86) International application number: PCT/US97/06800
(87) International publication number: WO 97/40907

(56) References cited:
- FR-A- 541 011
- FR-A- 2 554 009
- US-A- 2 267 918
- US-A- 5 149 427

## Description

### FIELD OF THE INVENTION

The present invention relates to a fluid-treatment media support system using a porous plate. Specifically the invention relates to a media support system using a porous plate, a layered porosity pattern in the porous plate, and an anchoring system for the porous plate. The fluid-treatment media supported by the system of this invention can be a filtration media or other media such as an ion exchange resin.

### BACKGROUND OF THE INVENTION

Water, wastewater and industrial liquid granular fluid-treatment units typically have a media support system that separates the media from the underdrain system and the bottom. The underdrain system is the primary support for the media, and, in filtration media support systems, also serves to collect the filtrate and provide for the uniform distribution of air and water during the backwash of the filter system.

Underdrain systems are often made of concrete blocks having spaces to allow for piping, such as air laterals, that are part of the backwash air distribution system. A precast concrete, plastic-jacketed underdrain block is disclosed in U.S. Patent 4,923,606. Nozzle-less type underdrain systems with large openings for the passage of the filtrate and the backwash water are preferred because they do not plug as easily as nozzle type underdrains. Because the openings in nozzle-less underdrains are larger than the size of the individual grains of the media, however, it is necessary to use a media support system between the underdrains and the media.

A media support system serves several purposes that are conflicting. For example, very fine media, such as 0.1 to 0.5 mm sand, may be used in potable water type filters. Consequently, a very fine media support is needed to separate this media from the underdrain system and filter bottom and prevent plugging and loss of filter media. Plugging of the underdrain system filter bottom causes a loss of the filtering capacities of the bed and downtime of the filter system. However, large or coarse-pore media support is necessary to promote the formation of larger air bubbles which are desired because they wash a filter better than fine bubbles of air. *Jung & Savage*, *"Deep Bed Filtration", Journal American WaterWorks Association, February, 1974, pp. 73-78.*

Two types of media support systems have been in common use: (1) support gravel beds comprised of graded gravel placed between the filter media and the filter bottom (or underdrain system) and (2) uniformly porous plates that are anchored to the side walls of the filter or to the underdrain blocks.

When layered gravel beds are used for media support systems, the bed of gravel is usually 305 to 457 mm (12 to 18 inches) in height with several layers of varying size gravel. The layers of gravel adjacent to the media and filter bottom are usually coarse and the intermediate layer or layers smaller or finer in size. The finer intermediate gravel layer inhibits the penetration of the media to the underdrain blocks. The coarser gravel in the top or cap layer, however, inhibits plugging of the fine gravel layer. If the finer media penetrates the gravel layers during filtration, it accumulates in the cap layer and is then washed out during the backwash cycle of the filtration process.

U.S. Patents 1,787,689 to Montgomery and 1,891,061 to Friend et al., for example, disclose a water treating tank containing zeolite water softeners. The gravel beds of the tanks are arranged in an hourglass configuration with layers of coarser and finer gravels.

Gravel layers have several disadvantages including difficulty in installation, the need for deeper filter boxes to allow for the depth of the gravel and higher costs. Also, the gradation of the gravel layers tends to be disturbed during the filtration and backwashing processes and downtime may be required to restore the desired gradation.

Porous plates have been used to replace gravel layers. Porous plates are typically manufactured from sintered plastics. Plastic porous plates, however, are usually buoyant and need to be secured in some way to prevent lifting, especially during the backwash cycle. Prior art methods of securing the porous plate include a combination of screwing and caulking or grouting the plate to the underdrain blocks as disclosed in U.S. Patent 5,149,427 to Brown, or bolting the plate to the underdrain blocks.

U.S. Patent 4,882,053 to Ferri discloses a porous plate used in a filter system without underdrain blocks; the porous plate is attached by a retaining angle secured to each wall of the filter box. The retaining angle holds the plate in place and a seal is made by a sealant bead applied between the side walls and the porous plates.

Problems arise with the above-referenced methods of anchoring the porous plates. Small irregularities in the floor of the filter, the underdrain blocks and the plates can cause seal failures between the plates. Seal failure allows media to penetrate the media support system, causes a progressive failure of the filter underdrain and then of the filter system itself. The underdrains, effluent piping, and clearwell may become plugged with media and the filter bottom may collapse due to excessive pressures which develop during backwash.

U.S. Patents 5,149,427 and 5,232,592 to Brown disclose a cap for filter underdrain blocks comprising a porous, planar body. The body of the cap is said to be adapted to support a fine grain filter media without the media penetrating therethrough. The pores in the cap body are approximately 700-800 microns in size.

U.S. Patent 4,882,053 to Ferri, mentioned above, discloses a support or drain plate for filter media comprising porous heat-fusible polyethylene in a traveling bridge filter. The porous drain plates have narrow heat fused, non-porous bands extending vertically through the plates. These bands provide rigidity to the plates said to decrease bowing and subsequent channelling of water during backwash experienced with lap joints. However, the non-porous band would tend to reduce permeability during filtration and increase head loss.

U.S. Patent 667,005 to David discloses a filter bottom for a granular bed that includes three sheets or layers of wire cloth.. The upper layer and lower layer are coarse with the intermediate layer being a fine mesh. U.S. Patent 2,267,918 to Hildabolt discloses a porous article formed from metal powders and having plural layers of different porosity. U.S. Patent 5,468,273 to Pevzner et al. discloses a nickel-based filter material having three strata of different porosity used for removing contaminants from air. French Patent specification 2554009 discloses a water-filtering device comprising a microfilter cloth placed between two protective cloths and disposed between a sand layer and a porous base plate. French Patent specification 541011 discloses support devices with cement sheathed pipes.

### SUMMARY OF THE INVENTION

The object of the present invention is to provide an improved system for supporting fluid treatment media. The object of the present invention is achieved with the features of the claims.

The system for supporting fluid-treatment media above a lower support of the present invention comprises a porous plate including at least three adjacent layers of at least two different pore sizes and means capable of locating the porous plate above the lower support, the porous plate being positioned so as to the capable of supporting fluid-treatment media. The system further provides an anchor for securely anchoring the porous plate to the infrastructure of the fluid-treatment bottom, thereby inhibiting media penetration to the fluid-treatment bottom and avoiding seal failures.

In one embodiment of the invention the adjacent layers comprise a relatively coarse pore size layer and a relatively fine pore size layer, the relatively fine pore size layer being located above the relatively coarse pore size layer.

In an alternative embodiment of the invention the adjacent layers comprise three layers consisting of an upper layer of a relatively coarse pore size layer, a central layer of relatively fine pore size and a lower layer of relatively coarse pore size.

In a further embodiment of the invention the adjacent layers comprise a relatively fine pore size layer above the lower support and a relatively coarse pore size layer above the fine pore size layer.

Preferably the adjacent layers comprises one layer of coarse pore size, with pores being sized from 500 to 5,000 microns, and at least one layer of fine pore size, the pores having a size from 150 to 1,500 microns.

Conveniently the porous plate is made of a material selected from the group consisting of ceramics, metals and polymers.

Advantageously the porous plate is formed of sintered polyethylene.

Conveniently the porous plate is supported by a layer of underdrain blocks, the underdrain blocks being located on the lower support.

Preferably the porous plate has a larger horizontal dimension than the horizontal dimension of the individual underdrain blocks so that a plurality of underdrain blocks support the porous plate.

Advantageously the porous plate is anchored to air laterals located beneath the underdrain blocks. A preferred system in accordance with the invention comprises a layer of underdrain blocks placed over an underlying infra-structure, the porous plate being placed over the underdrain blocks to support the fluid-treatment media, and a plurality of anchors extending from the porous plate through the layer of underdrain blocks to support the fluid-treatment media, and a plurality of anchors extending from the porous plate through the layer of underdrain blocks and engaging the infra-structure to secure the porous plate in position.

Preferably the infra-structure includes a plurality of air laterals running under the underdrain blocks, the anchors being secured to the air laterals.

Conveniently the underdrain blocks are arranged end-to-end in rows over the air laterals, and wherein the porous plate has a larger horizontal dimension than the horizontal dimension of the individual underdrain blocks so that the porous plate covers a plurality of underdrain blocks, the anchors extending between adjacent ends of the blocks.

Advantageously the upper ends of the anchors are secured to bars positioned over the porous plate running transversely to the rows of underdrain blocks.

Preferably each anchor passes through a bore formed through an overlap of a lap joint between adjacent porous plate sections forming the plate.

Conveniently the sides of adjacent underdrain blocks are interconnected by lugs.

Preferably a fluid-treatment media is supported on the porous plate.

Advantageously the media comprises a filter media.

Preferably the porous plate is located within a compartment having up-right walls, supporting the media which is located within the compartment.

### BRIEF DESCRIPTION OF THE DRAWINGS

FIGURE 1 is a perspective view, partially cut away, of a section of a filtration system illustrating a filter media support system according to one embodiment of this invention,
FIGURE 2 is a perspective view of a section of the filtration system illustrating the backwash flow through the filter media support system of Figure 1,
FIGURE 3 is a cross-section of the filter media support system of Figure 1 taken along lines 3-3,
FIGURE 4 is an enlarged view of a section of Figure 3,
FIGURE 5 is a perspective view, partially cut away, of the layered porosity plate according to one embodiment of this invention,
FIGURE 6 is a cross-section of the filter media support system of Figure 1 taken along lines 6-6,
FIGURE 7 is an enlarged view of a section of Figure 6,

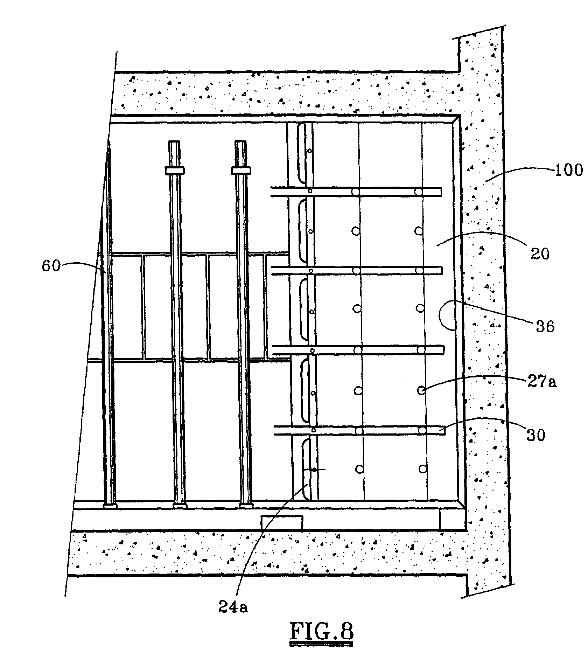

FIGURE 8 is a plan view of the filter media support system of Figure 1.

### DETAILED DESCRIPTION OF THE INVENTION

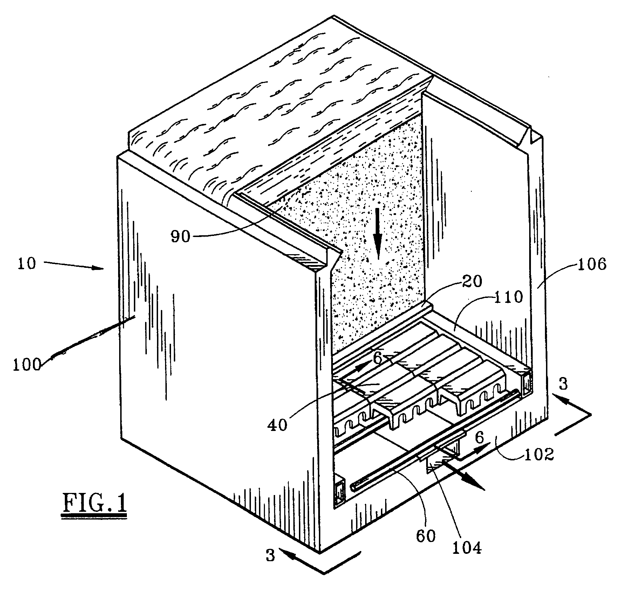

The fluid-treatment media support system of this invention is directed to a porous plate, of graded porosity, and a system for securely anchoring the porous plate to the structural support of the underdrain system. Figure 1 illustrates a section of a filtration system 10 and a porous plate 20 securely anchored within that system 10. Filtration system 10 is usually used to filter water, including potable water and wastewater and can also be used for ion exchange or other absorption processes. The filtration system **10** has a filter box **100** containing granular media **90,** such as sand, anthracite, or activated carbon, ion exchange resin, or the like, or a combination thereof. Filter influent flows into the filter box **100,** through the media **90** and drains through the underdrain system **50** to the bottom **102** of the filter box **100** where it collects in a sump **104.**

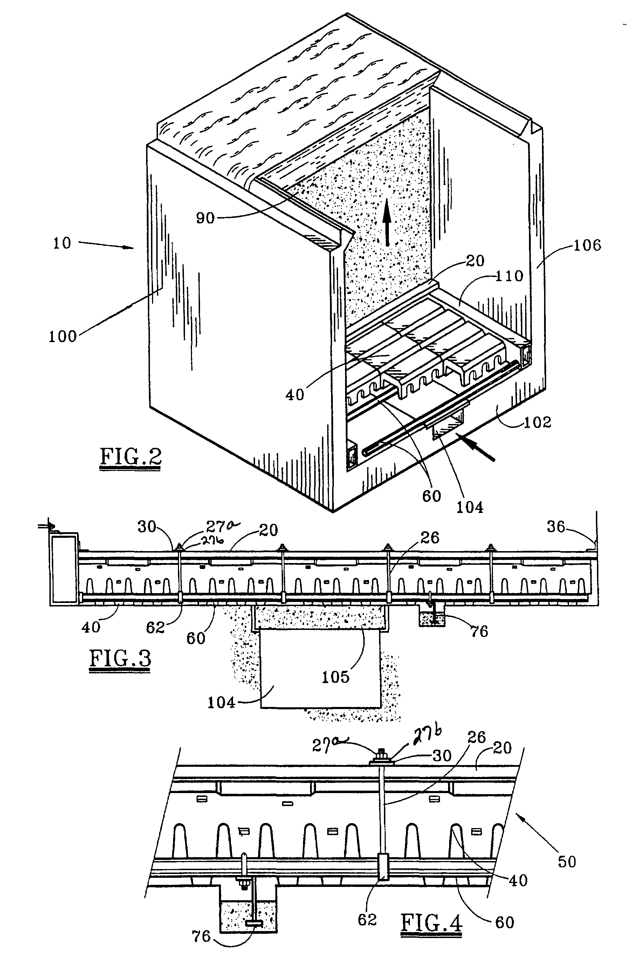

During the backwash phase of the filtration cycle, normal downward filtration stops and an upflow of liquid, usually water, and gas, usually compressed air, cleanse the filter system. As seen in Fig. 2, backwash water from backwash pumps (not shown) is pumped into the sump **104** and through the filter system **10.** Backwash air is supplied via headers **110** located on either side of the filter box **100,** and through air laterals **60** into the filter system **10.**

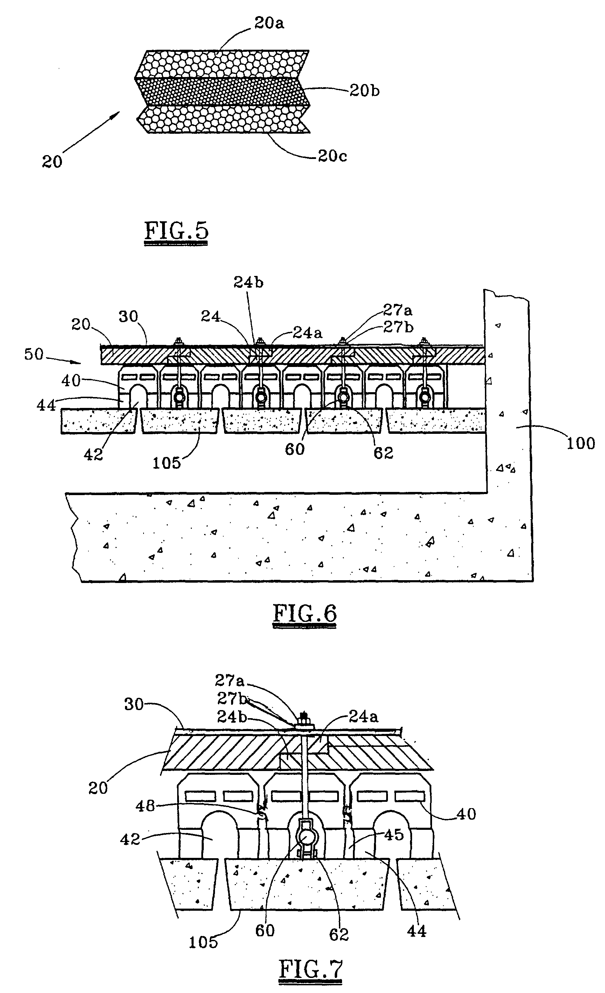

The porous plate **20** is positioned between the media **90** and the underdrain blocks **40,** thereby supporting and separating the filter media **90** from the underdrain system **50.** As illustrated in Fig. 5, the porous plate **20** has a reverse gradation of coarse and fine pore layers. In a preferred embodiment of the invention, a relatively coarse pore layer **20c** is adjacent the underdrain blocks **40** and another relatively coarse pore layer **20a** is adjacent the filter media **90.** A relatively fine pore layer **20b** lies between the two coarse pored layers **20a, 20c.** Varying size pores are beneficial in media support systems. A fine pore layer **20b** is necessary to separate fine media **90,** 0.1 to 0.5 mm sand for example, from the underdrain system. The fine pore layer **20b** prevents clogging of the underdrain system **50** and loss of filter media **90.** The coarse pore layer **20c** of the porous plate **20** promotes the formation of large air bubbles which wash the filter system better than fine air bubbles. Also, if any media penetrates the porous plate **20** during the filtration cycle, it will accumulate in the top coarse pore layer **20a** and is readily washed out during the backwash cycle. An alternative porous plate media support system allows for a fine layer of the porous plate to be placed adjacent to the filter bottom **102** and a relatively coarse pore size layer above the fine pore size layer so that the coarse layer is on top adjacent to the granular media or vice versa with the fine pore size layer on top of the coarse pore size so that the fine layer is adjacent to the media.

In a preferred embodiment, the pore size of the coarse layers **20a, 20c** range from 500 to 5000 microns. The pores in the fine pore layers **20b** range from 150 to 1500 microns. Contrary to the prior art gravel support layers, the porous plate system allows either the coarse pore layer or the fine pore layer to be adjacent to the media.

The porous plate **20** of this invention may be manufactured from ceramics, metals, particularly sintered metals such as nickel, titanium, stainless steel and the like; and polymers, such as polyethylene, polypropylene or polystyrene; or any suitable material. In a preferred embodiment, the material is a sintered polyethylene. The porous plate **20** can be formed by sintering heat-fusible particles to the desired shape. Other heat-fusible materials may be used such as polypropylene or the above referenced group of materials. The porous plate **20** can include different adjacent layers of different porosity fused integrally together, or the layers can be formed by stacking sheets of different porosity together where each sheet corresponds to a specific porosity layer.

The length and width of the porous plates **20** may vary according to the size of the underdrain blocks **40** or bottom **102** of filter box **100.** In a preferred embodiment, the porous plate **20** has a larger horizontal area or dimension than the individual underdrain blocks **40** so that the porous plate **20** covers a plurality of underdrain blocks **40.** In another preferred embodiment, the porous plates have widths in multiples of the width of the underdrain blocks **40.** The preferred thickness of the porous plate **20** varies from 25 mm (1 inch) or less to 51 mm (2 inches) or more, depending on the particular application.

A porous plate **20** manufactured from sintered polymers tends to be buoyant and float. Figs. 4 and 7 illustrate the improved anchoring of the porous plate **20** of one embodiment of this invention. The porous plate **20** is secured to the infrastructure **60** of the bottom **102** of filter box **100** rather than the side walls **106** of the filter box **100** or underdrain blocks **40** as done in the prior art media support systems. Anchoring the porous plate **20** to the infrastructure **60** improves the seal to prevent lifting and bowing, especially during the backwash cycle.

In a preferred embodiment of this invention, the porous plate **20** is anchored to the air lateral piping **60** which supplies the backwash air. The air laterals **60** are run in spaces **42** between block legs **44** of the underdrain blocks **40.** An air lateral **60** can be placed between the legs **44** of every other row of blocks **40.** A preferred underdrain block **40** is described in U.S. Patent 4,923,606. Briefly, as best seen in Figs. 6 and 7, the underdrain blocks **40** are arranged end-to-end in rows over the air laterals **60,** and the sides of adjacent underdrain blocks **40** are interconnected by lugs **48.** Preferably, the porous plate **20** has a larger horizontal area than the individual blocks **40** so that the porous plate **20** covers a plurality of the underdrain blocks **40.** Anchors **26** extend from the porous plate **20** between adjacent ends of the blocks **40** to the air laterals **60.** An indentation (not shown) is preferably formed in the opposing ends of the adjacent blocks **40** to accommodate the cross-section of the anchors **26.** Alternatively, the anchors **26** could extend directly through an aperture formed in the blocks **40** to an attachment point on the bottom 102 of filter box **100.**

Preferably, the upper ends of the anchors **26** are secured to bars **30** positioned over the porous plate **20,** The bars **30** preferably run transversely to the underdrain blocks **40** and help to hold the porous plates securely in place. This inhibits bowing or lifting of the porous plate **20.** Suitable bars **30** are manufactured of a corrosion-resistant metal such as stainless steel and are approximately 51 mm (2 inches) in width and 6.35 mm (1/4 inch) in depth. The preferred anchor **26** is a threaded rod manufactured from a corrosion-resistant metal such as stainless steel. The anchor **26** is secured to the porous plate **20** by a fastener, preferably a nut **27a** and an oversized washer **27b.** Additional sealants may be used to prevent leakage in the bore through the plate **20** around the rod **26.**

Fig. 6 illustrates sections of the porous plate **20** joined together by overlapping the ends of adjacent sections of the porous plate **20** at lap joints **24.** The lap joints **24** run parallel to the rows of underdrain blocks **40.** The anchors **26** pass through the bar **30,** through the porous plate **20** by means of a bore in the lap joints **24** and between the underdrain blocks **40,** and are secured to the air laterals **60.** Preferably, the anchors **26** are secured to the air laterals **60** by pipe clamps **62** circumscribing the air laterals **60** as illustrated in Figs. 4 and 7. Lateral support angles **76** grouted into the bottom **102** of filter box **100** can provide additional support for **the** air laterals **60.** As depicted in Fig. 3 support brackets **36** can also be used, if desired, to secure the porous plate **20** to the walls of the filter box **100.**

The porous plate **20** of the present invention may be installed in new filtration systems or retrofitted into existing systems. A filter box **100** having side walls **106** and a bottom **102** is constructed conventionally with an infrastructure **50** of air lateral piping **60** across the bottom **102** of filter box **100** and a sump **104** and sump cover plate **105** for collection of filtrate during the filtration process and for the supply of backwash water during backwashing operations. Pipe clamps **62** are placed around the air laterals **60** and anchors **26** secured to the pipe clamps **62.** The underdrain blocks **40** are arranged in rows over the air laterals **60** so that the air laterals **60** lie in spaces **42** between the block legs **44** with an air lateral **60** under every other row of blocks **40.** The blocks **40** are spaced apart to create a gap **45** which provides for air and water flow. The anchors **26** extend upward between the blocks **40.** The beveled configuration of the top of the blocks **40** creates a channel into the gap **45.** The blocks **40** can be interconnected with lugs **48** sized to provide the desired size of gap **45.** Additional sealing can be provided by grouting the perimeter blocks **40** to the filter box **100.** The blocks **40** should be of a weight to resist lifting and shifting, especially during the backwash phase but not so heavy as to prohibit easy handling.

After the underdrain system is in place, the sections of the porous plate **20** are placed over the rows of blocks **40** and joined by lap joints **24** which run parallel to the blocks **40.** Bores, preferably pre-formed, pass through the upper lips **24a** and lower lips **24b** of the adjacent sections of the porous plate **20** for receiving anchors **26** extending upwards from the rows of blocks **40,** thereby improving the seal of the lap joints **24.** A stainless steel bar **30**, running transversely to the blocks **40,** is placed over the lap joints **24.** The anchors are then secured by nuts **27a** and washers **27b.** Larger sheets of porous plate **20** can be made by further sealing the lap joints **24** by means of mastic, epoxy glues or thermal welding; however, this should be avoided as much as possible to minimize decreasing the permeability of the porous plate **20.** The anchors **26** thus extend through the bar **30,** through the bores in the lap joints **24,** between the underdrain blocks **40** and are secured to pipe clamps **62** circumscribing the air laterals **60.**

After the filtration media support system is in place, filter media **90** may be installed and operation of the filtration cycle initiated as the filter influent flows into the filter box **100.** Periodically, the filtration process may be stopped so that the filtration system may be backwashed.

The anchors **26** of the present invention securely hold the porous plate **20** to the air laterals **60,** thereby reducing lifting and bowing that is induced especially by the pressures exerted during the backwash cycle. The graded porosity layers of the plate **20** create larger air bubbles during the backwash cycle which wash the filter system better than fine bubbles, and yet provide fine pores for inhibiting media particles **90** from entering the underdrain system **50** during the filtration cycle.

### EXAMPLE 1

Air spreading tests are performed to observe and record the impact of the reverse-gradation porous plate of this invention on backwash air distribution. During the first test, underdrain blocks, specifically 1.98 m (78 inch) wide T-blocks, are installed in the test column. Media support gravel comprised of five layers configured in a reverse gradation, "hour-glass" pattern totaling 457 mm (18 inches) in depth is installed over the blocks. The column was filled with water up to the overflow weir and backwash air added at the rate of approximately 0.61 m³/min-m² (2.0 CFM/ft²). This test was repeated at air rates of approximately 1.22 m³/min-m² (4.0 CFM/ft²) and 1.83 m³/min-m² (6.0 CFM/ft²). The size and distribution of the air bubbles were measured and compared. The results were observed and photographed.

The above tests were repeated at approximately the same three backwash air rates with the layered porosity porous plate in place over the underdrain blocks to replace the gravel support layers. The porous plate had coarse-pored layers of about 9.5 mm (3/8 inch) thickness having a pore size approximately 600 micrometer and an intermediate fine-pore layer of about 9.5 mm (3/8 inch) thickness of approximately 350 micrometer. The thickness of the entire plate was about 28.6 mm (1-1/8 inch). The tests show that the porous plate produced an even pattern of air distribution, comparable to the conventional 457 mm (18 inches) of gravel support layers and equally large bubbles. The results were observed and photographed.

### EXAMPLE 2

Pressure loss tests were performed to observe and record the impact of the reverse-gradation porous plate of this invention on filter system loss-of-head. During the first test, 203 mm (8 inch) wide underdrain blocks, 457 mm (18 inches) of reverse-gradation gravel support layers and approximately 1.83 meters (72 inches) of 2.0-3.36 mm (6 mesh x 9 mesh) granular filtration media were installed in the test column. A series of filtration water rates and backwash air and water rates were applied to the test column and pressure loss measurements were made across each component of the filter system. Data were recorded and system head-loss curves prepared.

The above tests were repeated with the layered porosity porous plate in place over the underdrain blocks to replace the gravel support layers. Pressure loss measurements were made, data were recorded and system head-loss curves prepared. The tests show that the pressure loss across the 28.6 mm (1-1/8 inch) porous plate was comparable to the head-loss across the 457 mm (18 inches) of gravel support layers, examples of which are shown in the following tables.

**TABLE 1**

| Backwash Water Rate m³/min-m² (gpm/ft²) | Backwash Air Rate m³/min-m²(CFM/ft²) | Pressure Loss, Pa (Inches of Water) | |
|---|---|---|---|
| | | Porous Plate | Gravel Layers |
| 0.20 (5) | 0 (0) | 62 (0.25) | 109 (0.44) |
| 0.41 (10) | 0 (0) | 249 (1.00) | 221 (0.89) |
| 0.61 (15) | 0 (0) | 373 (1.50) | 333 (1.34) |
| 0.81 (20) | 0 (0) | 644 (2.59) | 445 (1.79) |
| 0.98 (24) | 0 (0) | 965 (3.88) | 535 (2.15) |

**TABLE 2**

| Backwash Water Rate m³/min-m² (gpm/ft²) | Backwash Air Rate m³/min-m²(CFM/ft²) | Pressure Loss, Pa (Inches of Water) | |
|---|---|---|---|
| | | Porous Plate | Gravel Layers |
| 0.20 (5) | 0.081 (2) | 483 (1.94) | 236 (0.95) |
| 0.61 (15) | 0.081 (2) | 1040 (4.19) | 883 (3.55) |
| 0.95 (23.4) | 0.081 (2) | 1740 (7.00) | 1430 (5.73) |

**TABLE 3**

| Filtration Rate m³/min-m² (gpm/ft²) | Pressure Loss, Pa (Inches of Water) | |
|---|---|---|
| | Porous Plate | Gravel Layers |
| 0.081 (2) | 31 (0.125) | 25 (0.10) |
| 0.20 (5) | 109 (0.44) | 114 (0.46) |
| 0.41 (10) | 296 (1.19) | 264 (1.06) |

### EXAMPLE 3

Media retention tests were performed to observe and record the impact of the reverse-gradation porous plate of this invention on the amount of fine media retained on it. During the first test, a 102 mm² (4 square inch) square piece of 500 micrometers single porosity 31.75 mm (1-1/4 inch) thick porous plate was placed between 76 mm (3 inch) diameter, 38 mm (1-1/2 inch) deep plexiglass columns affixed to the top and the bottom of the plate. A 50 gram sample of garnet sand media with a size of approximately 200 micrometer to 300 micrometer was placed on top of the 500 micrometer porous plate and the plate tapped against a firm, flat surface for 6 minutes at a tapping rat of 100 strokes per minute and a stroke length of 44 mm (1/4 inch). The amount of media which passed through the plate was collected and weighed 1.8 gram. This test was repeated with a reverse-gradation porous plate which had coarse-pore layers of about 9.5 mm (3/8 inch) thickness, having a pore size of approximately 500 micrometer and an intermediate fine-pore layer about 9.5 mm (3/8 inch) thickness with pore size approximately 250 micrometer. The amount of media which passed through this reverse-gradation porous plate was 0.1 gram.

The foregoing description is illustrative and explanatory of preferred embodiments of the invention, and variations in the size, shape, materials and other details will become apparent to those skilled in the art.

## Claims

1. A system for supporting fluid-treatment media above a lower support, **characterized in that** said system comprises a rigid porous plate (20) including at least three adjacent layers of (20a, 20b) at least two different pore sizes and means capable of locating the porous plate (20) above the lower support, the porous plate (20) being positioned so as to be capable of supporting fluid-treatment media.

2. A system for supporting fluid-treatment media according to Claim 1 wherein two of said adjacent layers comprise a relatively coarse pore size layer (20a) and a relatively fine pore size layer (20b), the relatively fine pore size layer (20b) being located above the relatively coarse pore size layer (20a).

3. A system for supporting fluid-treatment media according to Claim 1 wherein said adjacent layers comprise three layers consisting of an upper layer (20a) of a relatively coarse pore size layer, a central layer (20b) of relatively fine pore size and a lower layer (20c) of relatively coarse pore size.

4. A system for supporting fluid-treatment media according to Claim 1 wherein the adjacent layers comprise a relatively fine pore size layer (20b) above the lower support and a relatively coarse pore size layer (20a) above the fine pore size layer (20b).

5. A system for supporting fluid-treatment media according to any one of the preceding Claims wherein the adjacent layers comprises one layer (20a) of coarse pore size, with pores being sized from 500 to 5,000 microns, and at least one layer (20b) of fine pore size, the pores having a size from 150 to 1,500 microns.

6. A system for supporting fluid-treatment media according to any one of the preceding Claims wherein the porous plate (20) is made of a material selected from the group consisting of ceramics, metals and polymers.

7. A system for supporting fluid-treatment media according to any one of the preceding Claims wherein the porous plate (20) is formed of sintered polyethylene.

8. A system for supporting fluid-treatment media according to any one of Claims 1 to 7 wherein the porous plate (20) is supported by a layer of underdrain blocks (40), the underdrain blocks (40) being located on the lower support.

9. A system for supporting fluid-treatment media according to Claim 8 wherein the porous plate (20) has a larger horizontal dimension that the horizontal dimension of the individual underdrain blocks (40) so that a plurality of underdrain blocks (40) support the porous plate (20).

10. A system for supporting fluid-treatment media according to Claims 8 or 9 wherein the porous plate (20) is anchored to air laterals (60) located beneath the underdrain blocks (40).

11. A system for supporting fluid-treatment media accerding to any one of Claims 1 to 7 comprising a layer of underdrain blocks (40) placed over an underlying infra-structure (50), the porous plate (20) being placed over the underdrain blocks (40) to support the fluid-treatment media, and a plurality of anchors (26) extending from the porous plate (20) through the layer of underdrain blocks (40) to support the fluid-treatment media, and a plurality of anchors (26) extending from the porous plate (20) through the layer of underdrain blocks (40) and engaging the infra-structure (50) to secure the porous plate (20) in position.

12. A system according to Claim 11 wherein the infra-structure includes a plurality of air laterals (40) running under the underdrain blocks (40), the anchors (26) being secured to the air laterals (40).

13. A system according to Claim 12 wherein the underdrain blocks (40) are arranged end-to-end in rows over the air laterals (60), and wherein the porous plate (20) has a larger horizontal dimension than the horizontal dimension of the individual underdrain blocks (40) so that the porous plate (20) covers a plurality of underdrain blocks (40), the anchors (26) extending between adjacent ends of the blocks (40).

14. A system according to Claim 13 wherein the upper ends of the anchors (26) are secured to bars (30) positioned over the porous plate (20) running transversely to the rows of underdrain blocks (40).

15. A system according to any one of Claims 11 to 14 wherein each anchor (26) passes through a bore formed through an overlap of a lap joint (24) between adjacent porous plate (20) sections forming the plate.

16. A system according to any one of Claims 11 to 15 wherein the sides of adjacent underdrain blocks (40) are interconnected by lugs (48).

17. A system according to any one of Claims 1 to 16 wherein a fluid-treatment media is supported on the porous plate (20).

18. A system according to Claim 17 wherein the media comprises a filter media (90).

19. A system according to Claims 17 or 18 wherein the porous plate (20) is located within a compartment having up-right walls, supporting the media which is located within the compartment.

## Patentansprüche

1. Trägersystem für Fluidbehandlungsmedien über einem unteren Träger, **dadurch gekennzeichnet, daß** das System eine starre poröse Platte (20) mit mindestens drei benachbarten Schichten (20a, 20b) mit mindestens zwei unterschiedlichen Porengrößen und eine Einrichtung aufweist, die in der Lage ist, die poröse Platte (20) über dem unteren Träger anzuordnen, wobei die poröse Platte (20) derart positioniert ist, daß sie fähig ist, Fluidbehandlungsmedien zu tragen.

2. Trägersystem für Fluidbehandlungsmedien nach Anspruch 1, wobei zwei der benachbarten Schichten eine Schicht (20a) mit relativ grober Porengröße und eine Schicht (20b) mit relativ feiner Porengröße aufweisen, wobei die relativ feinporige Schicht (20b) über der relativ grobporigen Schicht (20a) angeordnet ist.

3. Trägersystem für Fluidbehandlungsmedien nach Anspruch 1, wobei die benachbarten Schichten drei Schichten aufweisen, die aus einer oberen Schicht (20a) mit relativ grober Porengröße, einer Mittelschicht (20b) mit relativ feiner Porengröße und einer unteren Schicht (20c) mit relativ grober Porengröße bestehen.

4. Trägersystem für Fluidbehandlungsmedien nach Anspruch 1, wobei die benachbarten Schichten eine Schicht (20b) mit relativ feiner Porengröße über dem unteren Träger und eine Schicht (20a) mit relativ grober Porengröße über der Schicht (20b) mit feiner Porengröße aufweisen.

5. Trägersystem für Fluidbehandlungsmedien nach einem der vorangehenden Ansprüche, wobei die benachbarten Schichten eine Schicht (20a) mit grober Porengröße mit Porengrößen von 500 bis 5000 Mikrometern und mindestens eine Schicht (20b) mit feiner Porengröße aufweisen, wobei die Poren eine Größe von 150 bis 1500 Mikrometern haben.

6. Trägersystem für Fluidbehandlungsmedien nach einem der vorangehenden Ansprüche, wobei die poröse Platte (20) aus einem Material hergestellt ist, das aus der Gruppe ausgewählt ist, die aus keramischen Werkstoffen, Metallen und Polymeren besteht.

7. Trägersystem für Fluidbehandlungsmedien nach einem der vorangehenden Ansprüche, wobei die poröse Platte (20) aus gesintertem Polyethylen gebildet ist.

8. Trägersystem für Fluidbehandlungsmedien nach einem der Ansprüche 1 bis 7, wobei die poröse Platte (20) von einer Schicht aus Unterboden-Entwässerungsblöcken (40) getragen wird, wobei die Unterboden-Entwässerungsblöcke (40) auf dem unteren Träger angeordnet sind.

9. Trägersystem für Fluidbehandlungsmedien nach Anspruch 8, wobei die poröse Platte (20) eine größere horizontale Abmessung als die horizontale Abmessung der einzelnen Unterboden-Entwässerungsblöcke (40) hat, so daß eine Vielzahl von Unterboden-Entwässerungsblöcken (40) die poröse Platte (20) trägt.

10. Trägersystem für Fluidbehandlungsmedien nach Anspruch 8 oder 9, wobei die poröse Platte (20) in Luftnebenleitungen (60) verankert ist, welche unterhalb der Unterboden-Entwässerungsblöcke (40) angeordnet sind.

11. Trägersystem für Fluidbehandlungsmedien nach einem der Ansprüche 1 bis 7, das aufweist: eine Schicht aus Unterboden-Entwässerungsblöcken (40), die über einer darunter liegenden Infrastruktur (50) angeordnet sind, wobei die poröse Platte (20) über den Unterboden-Entwässerungsblöcken (40) plaziert ist, um die Fluidbehandlungsmedien zu tragen, und eine Vielzahl von Ankern (26), die sich von der porösen Platte (20) durch die Schicht aus Unterboden-Entwässerungsblöcken (40) erstrecken, um die Fluidbehandlungsmedien zu tragen, und eine Vielzahl von Ankern (26), die sich von der porösen Platte (20) durch die Schicht aus Unterboden-Entwässerungsblöcken (40) erstrecken und in die Infrastruktur (50) eingreifen, um die poröse Platte (20) in ihrer Lage zu befestigen.

12. System nach Anspruch 11, wobei die Infrastruktur eine Vielzahl von unter den Unterboden-Entwässerungsblöcken (40) verlaufenden Luftnebenleitungen (60) aufweist und die Anker (26) an den Luftnebenleitungen (60) befestigt sind.

13. System nach Anspruch 12, wobei die Unterboden-Entwässerungsblöcke (40) in Reihen Ende-an-Ende über den Luftnebenleitungen (60) angeordnet sind und wobei die poröse Platte (20) eine größere horizontale Abmessung hat als die horizontale Abmessung der einzelnen Unterboden-Entwässerungsblöcke (40), so daß die poröse Platte (20) eine Vielzahl von Unterboden-Entwässerungsblöcken (40) bedeckt und die Anker (26) sich zwischen benachbarten Enden der Blöcke (40) erstrecken.

14. System nach Anspruch 13, wobei die oberen Enden der Anker (26) an Balken (30) befestigt sind, die über der porösen Platte (20) positioniert sind, wobei die poröse Platte (20) quer zu den Reihen aus Unterboden-Entwässerungsblöcken (40) verläuft.

15. System nach einem der Ansprüche 11 bis 14, wobei jeder Anker (26) durch eine Bohrung läuft, die durch einen Überlapp einer Überlappungsverbindung (24) zwischen benachbarten die Platte bildenden porösen Plattenabschnitten (20) geformt ist.

16. System nach einem der Ansprüche 11 bis 15, wobei die Seiten von benachbarten Unterboden-Entwässerungsblöcken (40) durch Laschen (48) miteinander verbunden sind.

17. System nach einem der Ansprüche 1 bis 16, wobei ein Fluidbehandlungsmedium auf der porösen Platte (20) getragen wird.

18. System nach Anspruch 17, wobei das Medium ein Filtermedium (90) aufweist.

19. System nach Anspruch 17 oder 18, wobei die poröse Platte (20) in einem Abteil mit senkrechten Wänden, die das in dem Abteil angeordnete Medium tragen, angeordnet ist.

## Revendications

1. Système pour supporter un milieu de traitement de fluide au-dessus d'un support inférieur, **caractérisé en ce que** ledit système comprend une plaque poreuse rigide (20) comprenant au moins trois couches adjacentes (20a, 20b) ayant au moins deux grosseurs de pores différentes et des moyens capables de placer la plaque poreuse (20) au-dessus du support inférieur, la plaque poreuse (20) étant positionnée de façon à pouvoir supporter le milieu de traitement de fluide.

2. Système pour supporter un milieu de traitement de fluide selon la revendication 1, dans lequel deux desdites couches adjacentes comprennent une couche ayant une grosseur de pores relativement grosse (20a) et une couche ayant une grosseur de pores relativement fine (20b), la couche ayant une grosseur de pores relativement fine (20b) étant placée au-dessus de la couche ayant une grosseur de pores relativement grosse (20a).

3. Système pour supporter un milieu de traitement de fluide selon la revendication 1, dans lequel lesdites couches adjacentes comprennent trois couches comprenant une couche supérieure (20a) ayant une grosseur de pores relativement grosse, une couche centrale (20b) ayant une grosseur de pores relativement fine et une couche inférieure (20c) ayant une grosseur de pores relativement grosse.

4. Système pour supporter un milieu de traitement de fluide selon la revendication 1, dans lequel les couches adjacentes comprennent une couche (20b) ayant une grosseur de pores relativement fine au-dessus du support inférieur et une couche (20a) ayant une grosseur de pores relativement grosse au-dessus de la couche (20b) ayant une grosseur de pores fine.

5. Système pour supporter un milieu de traitement de fluide selon l'une quelconque des revendications précédentes, dans lequel les couches adjacentes comprennent une couche (20a) ayant une grosseur de pores grosse, les pores ayant une grosseur comprise entre 500 et 5000 micromètres, et au moins une couche (20b) ayant une grosseur de pores fine, les pores ayant une grosseur comprise entre 150 et 1500 micromètres.

6. Système pour supporter un milieu de traitement de fluide selon l'une quelconque des revendications précédentes, dans lequel la plaque poreuse (20) est faite dans une matière sélectionnée dans le groupe comprenant des céramiques, des métaux et des polymères.

7. Système pour supporter un milieu de traitement de fluide selon l'une quelconque des revendications précédentes dans lequel la plaque poreuse (20) est formée de polyéthylène fritté.

8. Système pour supporter un milieu de traitement de fluide selon l'une quelconque des revendications 1 à 7 dans lequel la plaque poreuse (20) est supportée par une couche de blocs de dalots (40), les blocs de dalots (40) étant placés sur le support inférieur.

9. Système pour supporter un milieu de traitement de fluide selon la revendication 8, dans lequel la plaque poreuse (20) a une cote horizontale plus grande que la cote horizontale de chaque bloc de dalot (40), de sorte qu'une pluralité de blocs de dalots (40) supportent la plaque poreuse (20).

10. Système pour supporter un milieu de traitement de fluide selon les revendications 8 ou 9, dans lequel la plaque poreuse (20) est ancrée à des branches latérales d'air (60) placées sous les blocs de dalots (40).

11. Système pour supporter un milieu de traitement de fluide selon l'une quelconque des revendications 1 à 7, comprenant une couche de blocs de dalots (40) placée sur une infrastructure sous-jacente (50), la plaque poreuse (20) étant placée sur les blocs de dalots (40) pour supporter le milieu de traitement de fluide et une pluralité d'ancrages (26) s'étendant à partir de la plaque poreuse (20) à travers la couche de blocs de dalots (40) pour supporter le milieu de traitement de fluide et une pluralité d'ancrages (26) s'étendant à partir de la plaque poreuse (20) à travers la couche de blocs de dalots (40) et engageant l'infrastructure (50) pour immobiliser la plaque poreuse (20) dans sa position.

12. Système selon la revendication 11, dans lequel l'infrastructure comprend une pluralité de branches latérales d'air (60) s'étendant sous les blocs de dalots (40), les ancrages (26) étant fixés aux branches latérales d'air (60).

13. Système selon la revendication 12 dans lequel les blocs de dalots (40) sont disposés bout à bout en rangées au-dessus des branches latérales d'air (60) et dans lequel la plaque poreuse (20) a une cote horizontale plus grande que la cote horizontale de chaque bloc de dalot (40), de façon à ce que la plaque poreuse (20) couvre une pluralité de blocs de dalots (40), les ancrages (26) s'étendant entre les extrémités adjacentes des blocs (40).

14. Système selon la revendication 13, dans lequel les extrémités supérieures des ancrages (26) sont fixées à des barres (30) placées au-dessus de la plaque poreuse (20) s'étendant transversalement par rapport aux rangées de blocs de dalots (40).

15. Système selon l'une quelconque des revendications 11 à 14 dans lequel chaque ancrage (26) passe à travers un perçage formé dans un recouvrement d'un joint à recouvrement (24) entre des sections adjacentes de la plaque poreuse (20) formant la plaque.

16. Système selon l'une quelconque des revendications 11 à 15, dans lequel les côtés des blocs de dalots adjacents (40) sont interconnectés par des oreilles (48).

17. Système selon l'une quelconque des revendications 1 à 16, dans lequel un milieu de traitement de fluide est supporté sur la plaque poreuse (20).

18. Système selon la revendication 17, dans lequel le milieu comprend un milieu à filtrer (90).

19. Système selon les revendications 17 ou 18, dans lequel la plaque poreuse (20) est placée à l'intérieur d'un compartiment ayant des parois droites supportant le milieu qui est placé à l'intérieur du compartiment.
